# EUROPEAN PATENT SPECIFICATION

(11) **EP 0 675 174 B1**
(45) Date of publication and mention of the grant of the patent: **25.07.2001**
(21) Application number: 95101341.6
(22) Date of filing: 01.02.1995
(51) Int. Cl.: C09B 67/22, D06P 1/16

(54) **Dye composition and method of dyeing hydrophobic fiber therewith**
Farbstoffzusammensetzung und Verfahren zum Färben von hydrophoben Fasern
Composition de colorants et méthode de teinture de fibres hydrophobes l'utilisant

(30) Priority: 04.02.1994 JP 3200994; 04.02.1994 JP 3201294; 10.08.1994 JP 20827194
(43) Date of publication of application: 04.10.1995
(73) Proprietor: Nippon Kayaku Kabushiki Kaisha, Tokyo (JP)
(72) Inventor: Satoh, Yoshiyuki, Omiya-shi, Saitama-ken (JP); Akatani, Yoshiki, Tokyo (JP); Murakami, Yasuo, Kawaguchi-shi, Saitama-ken (JP); Yoshioka, Kazuma, Tokyo (JP)
(74) Representative: Gille Hrabal Struck Neidlein Prop Roos

(56) References cited:
- EP-A- 0 042 535
- EP-A- 0 279 272
- EP-A- 0 300 626
- DE-A- 3 537 257
- CHEMICAL ABSTRACTS, vol. 89, no. 18, 30 October 1978 Columbus, Ohio, US; abstract no. 148078, page 60; column ; & JP-A-53 061 781
- CHEMICAL ABSTRACTS, vol. 114, no. 20, 20 May 1991 Columbus, Ohio, US; abstract no. 187503d, page 101; & PL-A-148 430 31 January 1990
- DATABASE WPI Section Ch, Week 8245 Derwent Publications Ltd., London, GB; Class A60, AN 76-30897X & JP-B-57 049 062 ( NIPPON KAYAKU KK) , 20 October 1982

## Description

### BACKGROUND OF THE INVENTION

The present invention relates to a dye composition and a method of dyeing with the same. In particular, the present invention relates to a water-insoluble disperse dye composition containing specified dyes, and a method of dyeing a hydrophobic fiber with it.

Recently, discriminative commercial products having features of synthetic.fibers have come to be produced as new synthetic fibers (Shingosen) by many fiber makers. The fibers constituting these products are prepared by a composite-forming treatment of discriminative commercial products each having characteristics, such as microfibers, characteristic cross section yarn, yarn composed of differently shrinkable fibers, etc., or they comprise a combination of such fibers. The use of them is now rapidly spreading on the market, since the touch and hand specific to the synthetic textiles such as silk-like materials, thin raised textiles or knits having a so-called peach skin and rayon-like materials and different from the touch and hand of natural textiles are accepted by the users.

However, in dyeing these materials which realize such a new sense, problems arise, since particularly the fibers are so extremely thin as to increase the surface areas of the fibers. The problems are, for example,
(1) the light reflected on the fiber surface is increased to lower the visual depth of shade of the dyeings,
(2) the light fastness of the dyed fibers is lowered and the fibers are apt to be oxidized or reduced when they are exposed to light,
(3) the amount of the dye used per unit area is increased for the above-described reason (1) and, therefore, the sublimation and wet fastnesses of the dyeings are lowered, and
(4) poor level dyeing of the composite fibers occurs due to the difference in fineness between the filaments composing the fibers.

For solving the above-described problems, it is necessary not only to use a dye having an excellent building-up property and high fastnesses, but also to use a dye which permits level dyeing or good solid shade dyeing of a fabric comprising a blend of fibers having different finenesses. However, few of the dyes available n the market at present combine these requirements to the full. Thus, it is demanded to develop a dye combining these requirements to the full.

Combinations of dye products are familiar in the art. Such combinations are for instance described in EP-A-0 279 272, EP-A-0 042 535, DE-A-35 37 257, JP-A-53 061 781, EP-A-0 300 626, PL-A-148 430 31 and JP-B-57 049 062. provides a dye composition characterized by comprising a dye of formula (1), (3) and (5): 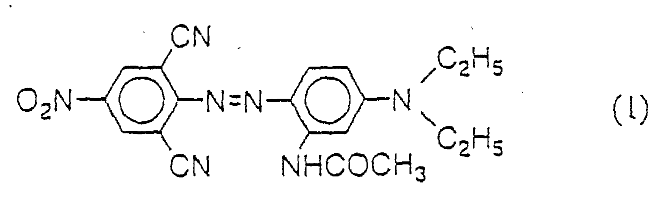 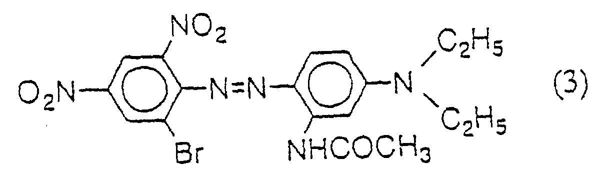 and 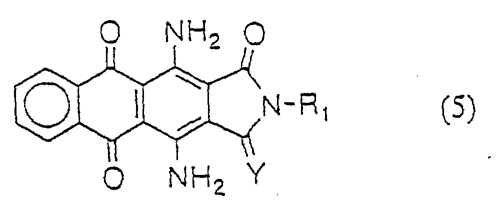 wherein Y represents oxygen or imino, and R₁ represents linear or branched lower alkoxy-lower alkyl, lower alkoxy-lower alkoxy-lower alkyl, lower alkoxycarbonyl-lower alkyl or lower alkyl,
and at least one of dyes of formulae (2) or (4):

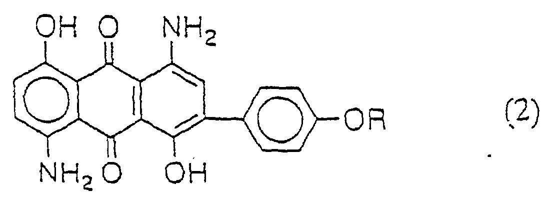

### SUMMARY OF THE INVENTION

After intensive investigations made for the purpose of solving the above-described problems, the inventors have found that the problems can be solved by dyeing with a specific dye composition containing a disperse dye mixture incorporated thereinto. Thus, the present invention wherein R represents hydrogen, lower alkyl or lower alkoxy-lower alkyl; 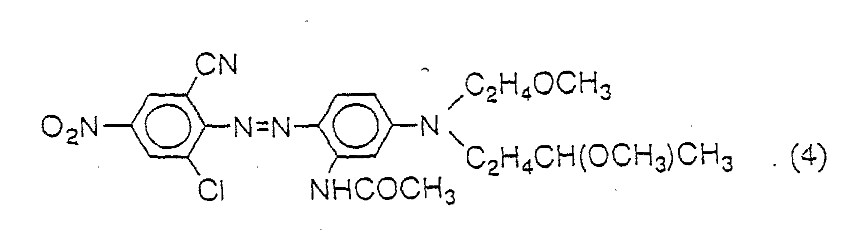 and a method of dyeing hydrophobic fibers with the dye composition. The terms "lower alkoxy" and "lower alkyl" as used herein indicate alkoxy and alkyl each having 1 to 4 carbon atoms.

### DETAILED DESCRIPTION OF THE INVENTION

A detailed description will be made on the present invention. Azo disperse dyes usually have poor level-dyeing properties, though they mostly exhibit an excellent build-up property and relatively high fastnesses. Anthraquinone dyes tend to exhibit poor build-up and sublimation fastness, though they mostly have excellent light fastness property and level-dyeing properties. Therefore, anthraquinone dyes have been mainly used in the field of pale to medium shade and azo dyes have been mainly used in the field of medium to heavy shade. However, in dyeing the fibers made of microfibers or blended fibers as described above, it has come to be difficult to use a dye selected according to the ordinary classification of them. Namely, in dyeing on a blended fabric comprising fibers of different finenesses, the visual depth of shade of microfibers is lower than that of fibers having a regular fineness for the above-described reasons to make level dyeing impossible, even though the amount of the exhausted dye in both of them is the same. Thus, dyes are required to be capable of level or good solid shade dyeing of such a fabric. In addition, a fastness level higher than that available in the prior art is required in dyeing on the microfibers.

The inventors have found that a dye composition having excellent level-dyeing properties for a blended fiber material comprising fibers of different finenesses and also having a high fastness can be obtained by blending at least one dye selected from among those of the above formulae (2) and (4) into a dye mixture comprising dyes of the above formula (1), (3) and (5). The inventors have completed the present invention on the basis of this finding. When the above-described blended fiber material is dyed with the dye composition of the present invention, it is possible to obtain dyeings having a high fastness and an excellent levelling property.

Preferably, the dye composition is prepared by blending 40 to 70% by weight of the dye of the above formula (1), 5 to 20% by weight of the dye of the above formula (3), 20 to 40% by weight of the dye of the above formula (4) and 2 to 10% by weight of the dye of the above formula (5), or 20 to 45% by weight of the dye of the above formula (1), 40 to 60% by weight of the dye of the above formula (2), 5 to 20% by weight of the dye of the above formula (3) and 2 to 10% by weight of the dye of the above formula (5).

The dye of the formula (5) is a turquoise dye used for shading. It can be added depending on the intended hue. Therefore, the object of the present invention can be attained even without using this dye. Dyes other than those described above may be used for, for example, shading, so far as the gist of the invention is not impaired, in the preparation of the dye composition of the present invention.

Examples of the dyes of the formula (2) used in the present invention include: 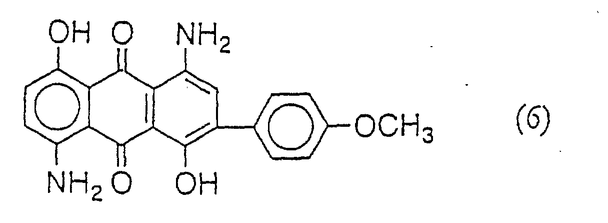 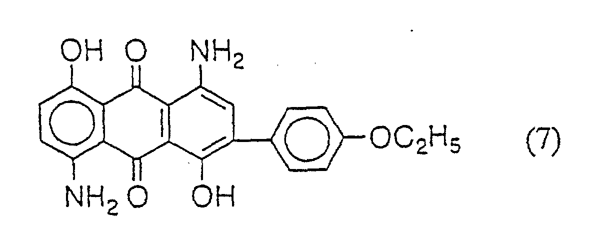 and 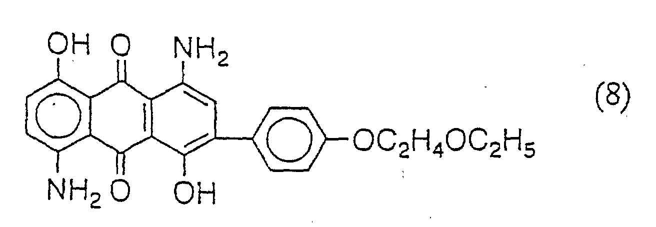 A mixture of them is also usable. Examples of the dyes of the formula (5) used in the present invention include: 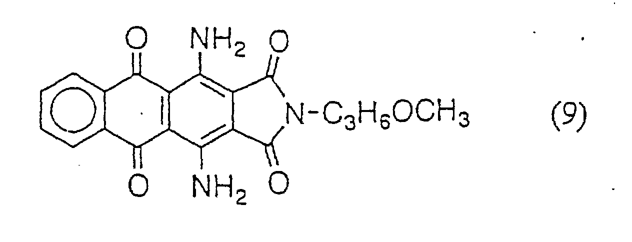 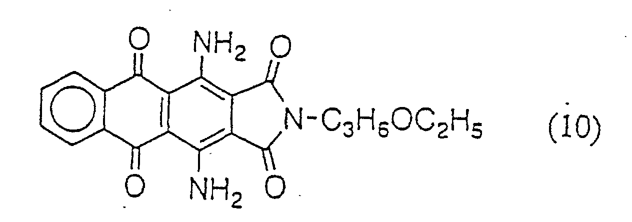 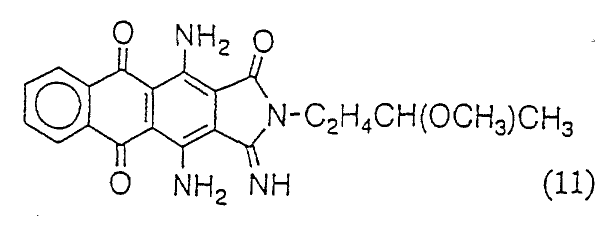 and 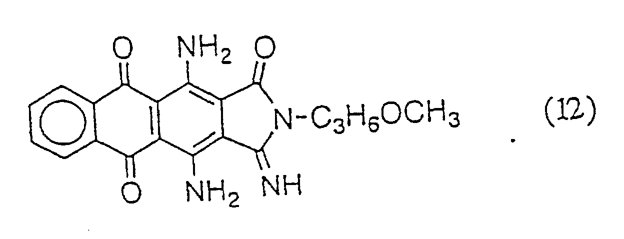 A mixture of them is also usable. The dyes of the formulae (1), (2), (3), (4) and (5) used in the preparation of the dye composition of the present invention are well known or they can be easily obtained by a well-known method. For example, the dye of the formula (1) is well known from Japanese Patent Publication No. 24707/1969, the dyes of the formula (2) from U.S. Patent No. 1,652,584, the dye of the formula (3) from Japanese Patent Publication No. 6592/1987, the dye of the formula (4) from Japanese Patent Publication No. 49062/1982, and the dyes of the formula (5) from Japanese Patent Publication Nos. 3384/1955, 14992/1964 and 4872/1966. The dyes can be produced by a method described in any of these publications.

The dye composition of the present invention may be prepared by mixing the dyes of the formulae (1), (2), (3), (4) and (5) in the relative amounts described above and then atomizing (or dispersing) the resultant mixture or, alternatively, by finely dividing each of the dyes separately from each other and mixing them in the above-described relative amounts. In the latter method, the finely divided dyes may be added into a dye bath to form the dye composition of the present invention in the bath.

In the atomization of the dyes of the formulae (1), (2), (3), (4) and (5) or the mixture of them to form very fine particles, the dyes are usually sufficiently pulverized by a wet process in the presence of an anionic dispersant such as a formalin condensate of naphthalenesulfonic acid and an alkylbenzenesulfonic acid, a formalin condensate of naphthalenesulfonic acid, cresol and 2-naphthol-6-sulfonic acid, a formalin condensate of creosote oil sulfonic acid, or ligninsulfonic acid; or a nonionic dispersant such as an ethylene oxide/propylene oxide block copolymer, an ethylene/alkylphenol copolymer or an ethylene oxide adduct of polystyrenated phenol; or a mixture of the anionic dispersant with the nonionic dispersant (the dispersant being used usually in an amount of 1 to 5 parts by weight per part by weight of the dye) and a small amount of water in a pulverizer such as a ball mill, sand grinder or sand mill. The dye composition of the present invention is used for dyeing in the form of a paste obtained after atomization into very small particles, or dry, very small particles of the dye after drying with a spray dryer or the like. When the dyes are separately atomized into very small particles by the above-described method, the dyes in the form of very small particles are mixed together before or in preparing a dye bath to be used for dyeing.

Examples of the hydrophobic fibers dyable by the method of the present invention include polyester fibers (PET fibers), triacetate fibers, diacetate fibers, polyamide fibers and blended fibers of them. The hydrophobic fibers also include blended fibers of them with regenerated fibers such as rayon or with natural fibers such as cotton, silk and wool fibers.

In dyeing the hydrophobic fibers with the dye composition comprising the dyes of the formulae (1), (2), (3), (4) and (5), it is advantageous to immerse the fibers in an aqueous solvent at a temperature of 105°C or above, preferably 110 to 140°C, under elevated pressure. The dyeing time is usually 30 to 150 min. The dyeing can be conducted also in the presence of a carrier such as o-phenylphenol or trichlorobenzene at a relatively high temperature in, for example, water-boiling state. The dyeing by the so-called thermosol method is also possible, wherein a cloth to be dyed is padded with the dye dispersion and then dry heat treatment of the cloth is conducted at 150 to 230°C for 30 sec to 1 min. Further, the dyeing can be conducted by preparing a printing paste from the dye composition of the present invention and a natural thickening agent (such as locust bean gum or guar gum), a processed thickening agent (such as a cellulose derivative, e.g. carboxymethylcellulose, or processed locust bean gum) or a synthetic thickening agent (such as polyvinyl alcohol or polyvinylacetic acid), printing the cloth with the paste, and steaming the cloth or conducting the thermosol treatment of the cloth. The dye composition of the present invention can be used together with other dye(s) such as a blue disperse dye or a yellow disperse dye for the dyeing.

The effect of the present invention will be described with reference to Tables 1 and 2. In the following description, parts and percentages are given by weight. Table 1 shows the comparison of solid shade effect between a fabric of 2.0 d (denier) textured polyester yarns [hereinafter referred to as "regular PET"] and a textile of 0.14 d textured polyester yarns [hereinafter referred to as "PET microfibers"] in one-bath dyeing. It will be apparent from Table 1 that the difference in the depth of shade between the regular PET and the PET microfibers obtained with the dye composition of the present invention was smaller than that obtained with a dye available on the market. Also it will be apparent from Table 2 that high light fastness, sublimation fastness and washing fastness can be obtained with the dye composition of the present invention, high levels of such fastnesses being required of microfiber materials.

**Table 1:**

| Comparison of solid shade effect in one-bath dyeing on regular PET and PET microfibers ^{(note 1)} | | | |
|---|---|---|---|
| Dye | Ratio of visual depth of shade (colorimetric value) ^{(note 2)} | | solid shade effect determined by visual judge |
| | regular PET | PET microfibers | |
| Ex. 1 | 100 (ref) | 78.0 | excellent |
| Comp. Ex. 1 | 100 (red) | 72.3 | excellent |
| Comp. Ex. 2 | 100 (ref) | 75.7 | excellent |
| Comp. Ex. 3 | 100 (ref) | 76.9 | excellent |
| Comp Ex. 4 | 100 (ref) | 74.6 | excellent |
| Comp Ex. 5 | 100 (ref) | 80.2 | excellent |
| Comp. Ex. 6 | 100 (ref) | 76.1 | excellent |
| Comp. Ex. 7 | 100 (ref) | 77.5 | excellent |
| Ex. 2 | 100 (ref) | 77.3 | excellent |
| Commercial dye ^{(note 3)} | 100 (ref) | 50.1 | ref. |

| | | | |
|---|---|---|---|
| (Note 1) Dye baths (each 3,000 parts in total) respectively containing 2 parts of the dye composition obtained in Example 1 and 2 and Comparative Examples 1 to 7 were prepared. 50 parts of the textile of 2.0 d textured polyester yarns and 50 parts of the textile of 0.14 d textured polyester yarns were immersed in each bath and dyed at 130°C for 60 min. The textiles were then reduction-rinsed, rinsed with water, and dried. In Comparative Example, a commercial dye was treated so that the cloth dyed therewith would have a visual depth of shade substantially equal to that obtained with the dye composition of Example 1, and then the dyeing was conducted in the same manner as that described above. | | | |
| (Note 2) The ratio of depth of shade of the PET microfibers to the regular PET was calculated by using a COMSEKIII color measuring system (mfd. by Nippon Kayaku Kabushiki Kaisha). The closer the value to 100, the closer the depth of shade of the dyed cloth and better solid shade effect. | | | |
| (Note 3) Disperse Blue 56 available on the market was used as the comparative dye. | | | |

**Table 2**

| Fastness test (note 4) | | | |
|---|---|---|---|
| Dye | Light (note 5) | Sublimation (note 6) | Washing (note 7) |
| Ex. 1 | 6-7 | 4 | 4-5 |
| Comp. Ex. 1 | 6-7 | 4 | 4-5 |
| Comp. Ex. 2 | 6-7 | 4 | 4-5 |
| Comp. Ex. 3 | 6-7 | 4 | 4 |
| Comp. Ex. 4 | 6-7 | 4 | 4 |
| Comp. Ex. 5 | 6-7 | 4 | 4-5 |
| Comp. Ex. 6 | 6-7 | 4 | 4 |
| Comp. Ex. 7 | 6-7 | 4 | 4 |
| Ex. 2 | 6-7 | 4 | 4 |
| Commercial dye (note 3) | 6 | 3 | 3 |

| | | | |
|---|---|---|---|
| (Note 4) Dye baths (each 3,000 parts in total) respectively containing 2 parts of the dye composition obtained in Example 1 and 2 and Comparative Examples 1 to 7 were prepared. 100 parts of a polyester tropical cloth was immersed in each bath and dyed at 130°C for 60 min. The cloths were then reduction-rinsed, rinsed with water and dried, and subjected to the fastness tests. In Comparative Example, a commercial dye was treated so that the cloth dyed therewith would have a visual color depth of shade substantially equal to that obtained with the dye composition of Example 1, and then the dyeing was conducted in the same manner as that described above. | | | |
| (Note 5) Ranks determined by judging the extent of change in shade and fading with a JIS change in shade blue scale by the carbon arc lamp method of JIS L 0842. | | | |
| (Note 6) Ranks determined by judging the extent of staining on white polyester cloth with a JIS stain gray scale according to JIS 0879B at 180°C for 30 sec. | | | |
| (Note 7) Ranks determined by judging the extent of staining of white nylon cloth with a JIS stain gray scale after heat-setting the dyed cloth at 180°C for 30 sec. followed by the washing test (according to AATCC Test Method 6111 A). | | | |

The following Examples will further illustrate the present invention, wherein parts and percentages are given by weight.

### Example 1

12.2 parts of the dye of the formula (1), 1.8 parts of that of the formula (3), 6.7 parts of that of the formula (4) and 1.3 parts of that of the formula (9) were atomized (dispersed) together with 78 parts of Demol N (an anionic dispersant, a product of Kao Corporation) with a sand grinder to obtain a dye composition of the present invention. Pure water having a pH adjusted to 4.5 was added to 2 parts of the dye composition to prepare 3,000 parts of a dye bath. 100 parts of a polyester tropical cloth was immersed in the bath to conduct the dyeing at 130°C for 60 min. The dyeings were reduction-rinsed in 3,000 parts of a bath comprising 6 parts of 45% sodium hydroxide, 6 parts of hydrosulfite, 3 parts of Sunmorl RC-700 (an anionic surfactant, a product of Nikka Chemical Co., Ltd.) and the balance of water at 80°C for 10 min, then rinsed with water, and dried to obtain a blue dyed cloth. This cloth had excellent light, sublimation and washing fastnesses.

### Comparative Example 1

12.8 parts of the dye of the formula (1), 1.9 parts of that of the formula (3) and 7.1 parts of that of the formula (4) were dispersed together with 78.2 parts of Demol N with a sand grinder to obtain a dye composition.

Then the same dyeing treatment as that of Example 1 was repeated to obtain a blue dyed cloth. The light, sublimation and washing fastnesses of the dyeings were on high levels as in Example 1.

### Comparative Example 2

14.2 parts of the dye of the formula (1) and 7.8 parts of that of the formula (4) were dispersed together with 78 parts of Demol N with a sand grinder to obtain a dye composition. Then the same dyeing treatment as that of Example 1 was repeated to obtain a blue dyed cloth. The light, sublimation and washing fastnesses of the dyeings were on high levels as in Example 1.

### Comparative Example 3

9.0 parts of the dye of the formula (1), 1.3 parts of that of the formula (3), 3.5 parts of that of the formula (4) and 13 parts of a dye comprising dyes of the formulae (6) and (7) in a ratio of 1:1 were dispersed together with 73.2 parts of Demol N with a sand grinder to obtain a dye composition. Then the same dyeing treatment as that of Example 1 was repeated to obtain a blue dyed cloth. The light, sublimation and washing fastnesses of the dyeings were on high levels as in Example 1.

### Comparative Example 4

10.5 parts of the dye of the formula (1) and 15.1 parts of that of the formula (6) were dispersed together with 74.4 parts of Demol N with a sand grinder to obtain a dye composition. Then the same dyeing treatment as that of Example 1 was repeated to obtain a blue dyed cloth. The light, sublimation and washing fastnesses of the dyeings were on high levels as in Example 1.

### Example 2 and Comparative Examples 5 to 7

The dyes of the formulae (1) through (4) and (9) can be blended together in the ratio specified in Table 3 in the same manner as that of Examples 1 to 5 to obtain the composition.

**Table 3**

| Dye | Comp. Ex. 5 | Comp. Ex. 6 | Comp. Ex. 7 | Ex. 2 |
|---|---|---|---|---|
| Dye of formula (1) | 14.0 | 9.0 | 10.6 | 10.6 |
| Dye comprising those of formulae (6) and (7) | - | 13.0 | 6.5 | 6.5 |
| Dye of formula (3) | 6.0 | - | 2.7 | 2.7 |
| Dye of formula (4) | - | 3.5 | 3.4 | 3.4 |
| Dye of formula (9) | - | - | - | 1.3 |
| in total | 20 | 25.5 | 23.2 | 24.5 |
| Demol N | 80 | 74.5 | 76.8 | 75.5 |

The numerals in the table indicate parts by weight.

### Example 3

Dye baths (each 3,000 parts in total) respectively containing 2 parts of the dye composition obtained in Example 1 and Comparative Examples 1 to 4 were prepared. 50 parts of a fabric of 2.0 d textured polyester yarns and 50 parts of a fabric of 0.14 d textured polyester yarns were immersed in each bath and dyed at 130°C for 60 min. The dyeings were then reduction-rinsed, rinsed with water, and dried to obtain blue dyed textiles. Each of the dyeings was excellent in solid shade between the 2.0 d textile and 0.14 d textile.

### Example 4

380 parts of water was added to 20 parts of the dye composition of Example 1. The resultant mixture was kneaded together with 600 parts of a stock paste containing 7.5% of Fine Gum MC-8 (a carboxymethylcellulose derivative; a product of Dai-ichi Kogyo Seiyaku Co., Ltd.), 4.5% of Sorbitose C 5 (an ether-type modified starch; a product of W. A. Scholten) and 0.3% of citric acid. A polyester palace fabric was printed with the kneaded mixture thus obtained. After high temperature steaming at 175°C for 7 min, the dyed'cloth was reduction-rinsed in 1,000 parts of a bath containing 2 parts of soda ash, 2 parts of a hydrosulfite, 1 part of Meisanol BHS New (a nonionic surfactant, a product of Meisei Kagaku Kogyo K.K.) and the balance of water at 80°C for 10 min, and then rinsed with water and dried to obtain a blue dyed cloth. The light, sublimation and washing fastnesses of the dyeings were on high levels.

When the dye composition of the present invention is used for dyeing, a composite material comprising fibers of different finenesses can be dyed to exhibit excellent level-dyeability and fastness.

## Claims

1. A dye composition characterized by comprising dyes of formulae: 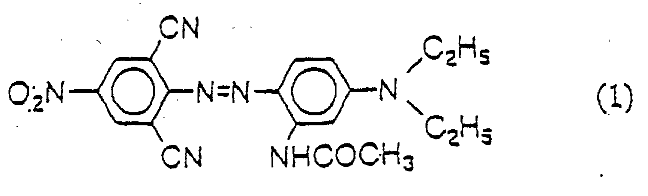 and 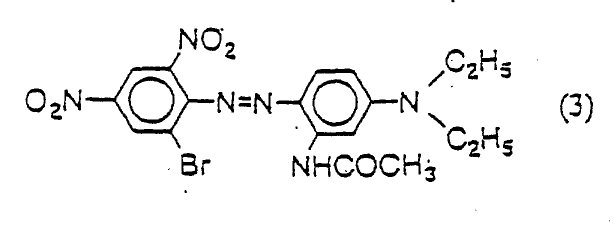 and 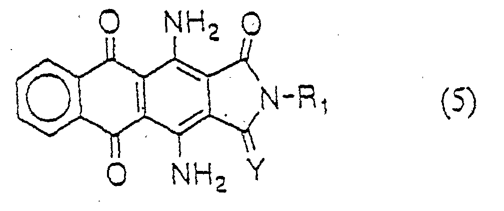 wherein Y represents oxygen or imino, and R₁ represents linear or branched lower alkoxy-lower alkyl, lower alkoxy-lower alkoxy-lower alkyl, lower alkoxycarbonyl-lower alkyl or lower alkyl,
and additionally a dye selected from the group consisting of dyes of the formulae 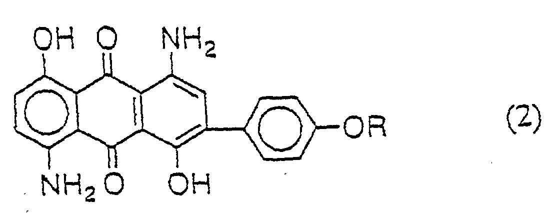 wherein R represents hydrogen, lower alkyl or lower alkoxy-lower alkyl; and

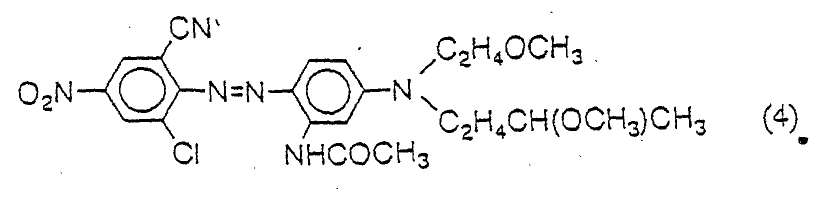

2. A dye composition A according to Claim 1, which comprises 40 to 70%, by weight of the dye of the above formula (1), 5 to 20%
by weight of the dye of the above formula (3), 20 to 40% by weight of the dye of the above formula (4) and 2 to 10% by weight of the dye of the above formula (5).

3. A dye composition B according to Claim 1, which comprises 20 to 45% by weight of the dye of the above formula (1), 40 to 60% by weight of the dye of the above formula (2), 5 to 20% by weight of the dye of the above formula (3), and 2 to 10% by weight of the dye of the above formula (5).

4. A method of dyeing a hydrophobic fiber, characterized by using the dye composition set forth in Claim 1, 2 or 3.

## Patentansprüche

1. Farbstoffzusammensetzung, dadurch charakterisiert, daß sie die Farbstoffe der Formeln 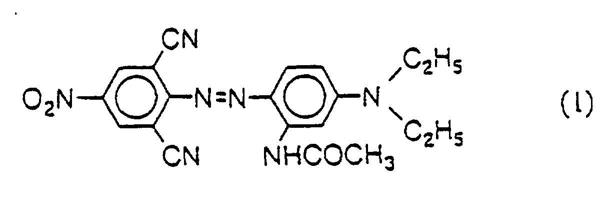 und 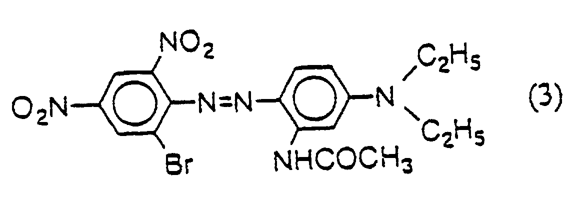 und 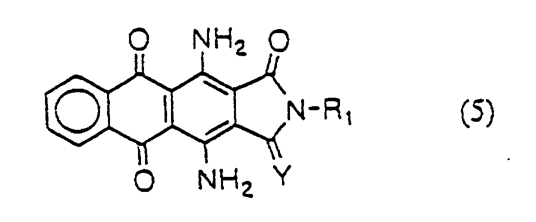 umfaßt, wobei Y Sauerstoff oder Imino darstellt, und R₁ lineares oder verzweigtes NiederAlkoxy-Niederalkyl, Niederalkoxy-Niederalkoxy-Niederalkyl, Niederalkoxycarbonyl-Niederalkyl oder Niederalkyl darstellt,
und zusätzlich einen Farbstoff, ausgewählt aus der Gruppe, die besteht aus Farbstoffen der Formeln 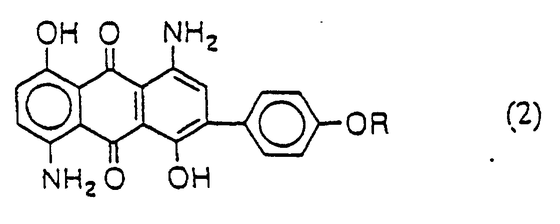 wobei R Wasserstoff, Niederalkyl oder Niederalkoxy-Niederalkyl darstellt; und

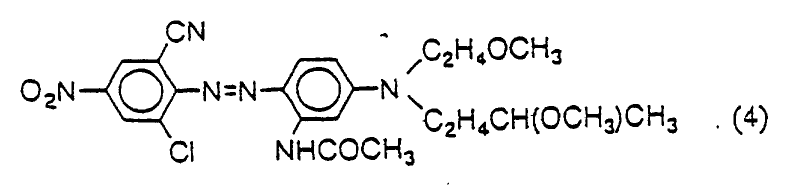

2. Farbstoffzusammensetzung A nach Anspruch 1, welche 40 - 70 Gewichtsprozent des Farbstoffs der obigen Formel (1), 5 - 20 Gewichtsprozent des Farbstoffs der obigen Formel (3), 20 - 40 Gewichtsprozent des Farbstoffs der obigen Formel (4) und 2 - 10 Gewichtsprozent des Farbstoffs der obigen Formel (5) umfaßt.

3. Farbstoffzusammensetzung B nach Anspruch 1, welche 20 - 45 Gewichtsprozent des Farbstoffs der obigen Formel (1), 40 - 60 Gewichtsprozent des Farbstoffs der obigen Formel (2), 5 - 20 Gewichtsprozent des Farbstoffs der obigen Formel (3), und 2 - 10 Gewichtsprozent des Farbstoffs der obigen Formel (5) umfaßt.

4. Verfahren zum Färben einer hydrophoben Faser, charakterisiert durch Verwendung der in Anspruch 1, 2 oder 3 angegebenen Farbstoffzusammensetzung.

## Revendications

1. Composition de colorant caractérisée en ce qu'elle comprend des colorants de formules : 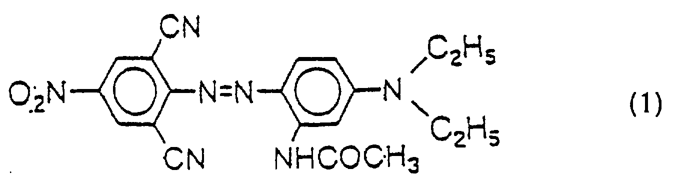 et 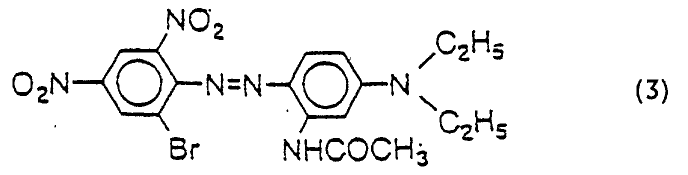 et 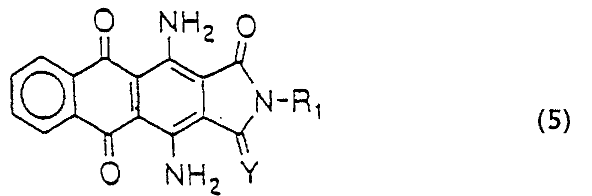 dans lesquelles Y représente un atome d'oxygène ou un groupe imino, et R₁ représente un groupe alcoxy inférieur-alkyle inférieur, alcoxy inférieur-alcoxy inférieur-alkyle inférieur, alcoxycarbonyle inférieur-alkyle inférieur ou alkyle inférieur, linéaire ou ramifié,
et par ailleurs un colorant choisi dans le groupe constitué par les colorants de formules : 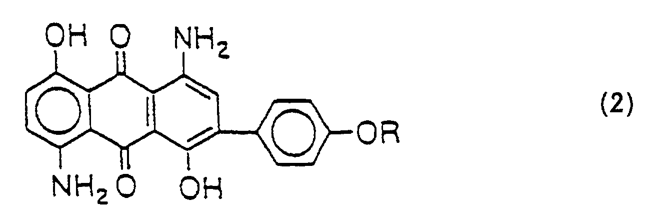 dans laquelle R représente un atome d'hydrogène, un groupe alkyle inférieur ou alcoxy inférieur-alkyle inférieur ; et

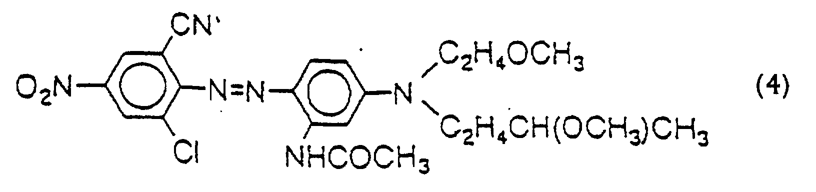

2. Composition de colorant A selon la revendication 1, qui comprend 40 à 70% en poids du colorant de formule (1) ci-dessus, 5 à 20% en poids du colorant de formule (3) ci-dessus, 20 à 40% en poids du colorant de formule (4) ci-dessus et 2 à 10% en poids du colorant de formule (5) ci-dessus.

3. Composition de colorant B selon la revendication 1, qui comprend 20 à 45% en poids du colorant de formule (1) ci-dessus, 40 à 60% en poids du colorant de formule (2) ci-dessus, 5 à 20% en poids du colorant de formule (3) ci-dessus et 2 à 10% en poids du colorant de formule (5) ci-dessus.

4. Procédé de teinture d'une fibre hydrophobe, caractérisé en ce qu'il utilise la composition de colorant définie dans la revendication 1, 2 ou 3.
